# EUROPEAN PATENT APPLICATION

(11) **EP 0 947 247 A1**
(43) Date of publication of application: **06.10.1999**
(21) Application number: 98200983.9
(22) Date of filing: 27.03.1998
(51) Int. Cl.: B01J 23/26

(54) **Dehydrogenation catalyst**

(71) Applicant: ENGELHARD CORPORATION, Iselin, New Jersey 08830-0770 (US); Linde Aktiengesellschaft, 82049 Höllriegelskreuth (DE)
(72) Inventor: Fritz, Peter M., 82008 Unterhaching (DE); Bölt, Heinz V., 82515 Wolfratshausen (DE); Hackner, Holger, 80807 München (DE); van Dijk, Gustaaf J.M., 3755 TN Eemnes (NL)
(74) Representative: Smulders, Theodorus A.H.J., Ir.

(57) **Abstract**

The invention is directed to a dehydrogenation catalyst based on an aluminium oxide support and chromium oxide, wherein the catalyst contains more than 30 wt.%, but not more than 40 wt.% of chromium, calculated as chromium(III)oxide, and to a process for preparing this catalyst.

## Description

The invention is directed to a chromium based dehydrogenation catalyst on an alumina support.

It is generally known that hydrocarbons, such as lower alkanes, can be dehydrogenated using chromium based catalysts. Depending on the type of hydrocarbon used, either a dehydrogenation to mono-olefins or di-olefins, or a cyclisation may take place. These reactions may also occur simultaneously, generally resulting in the formation of aromatic compounds.

When using alumina supports for the chromium compound (generally the oxide) unintended isomerisation and cracking may occur due to the acidic properties of the alumina. Generally these catalysts are promoted with an amount of metal oxide, such as alkali or alkaline earth metal oxide to counter this phenomenon.

These types of dehydrogenation catalysts based on chromium oxide on alumina have been described in the literature, such as US patent Nos. 3,719,721 and 5,378,350.

The latter patent discloses a dehydrogenation catalyst, having a preferred amount of chromium, calculated as chromium (III) oxide between 20 and 30 wt.%. In the examples not more than 25 wt.% of chromium-oxide is used. Although this catalyst showed a marked improvement over the state of the art at the date of the invention thereof, there is further room and need for improvement, especially in relation to a combined improvement of both activity and selectivity.

Accordingly it is a first object of the invention to provide novel dehydrogenation catalysts based on chromium oxide on alumina, having improved performance. It is a further object of the invention to provide such a catalyst having both improved activity and selectivity.

It is also an object of the invention to provide a catalyst showing decreased cracking and coke building in the dehydrogenation of hydrocarbons.

According to the invention these and other objects may be obtained by the catalyst of the invention, which is based on an aluminium oxide support and chromium oxide, wherein the catalyst contains more than 30 wt.%, but not more than 40 wt.% of chromium, calculated as chromium(III)oxide.

Surprisingly it has been found that the selection of the specific amount of chromium, compared to the amounts used in US patent No. 5,378,350, results in a significant decrease in coke building, while maintaining or even increasing activity and, of course, selectivity. Generally the skilled person would expect an increase in selectivity to be accompanied by a decrease in activity and vice versa. In the present situation the selectivity is increased while at least maintaining the activity (or even increasing it).

Below the lower limit of 30 wt.% of chromium, the effect of the invention is not obtained, whereas above 40 wt.%, especially in the long term, the coke building tends to increase. The advantages of the invention are especially obtained within the range of 33 to 37 wt.% of chromium, calculated as chromium (III) oxide.

According to a preferred embodiment the catalyst contains at least one metal oxide promoter, preferably selected from the group of alkali metal oxide, alkaline earth metal oxide and oxides of scandium, yttrium, zirconium, lanthanum, titanium or hafnium. The promoter is preferably present in an amount of 0.1 to 5 wt.%, calculated as metal oxide.

Most preferred promoters are the oxides of cesium, potassium and zirconium, either alone or in combination. Cesium and potassium are added to decrease the coke building and zirconium is used to increase the thermal stability of the catalyst. The amounts to be used preferably are for cesium and potassium between 1 and 3 wt.%, and for zirconium between 0.5 and 1 wt.%.

The support of the catalyst is alumina, either γ-alumina, or a transition alumina. The BET surface area of the support is preferably between 100 and 250, resulting in a BET-surface area of the final catalyst of between 50 and 100 m³/g.

The catalyst of the present invention can be used for the dehydrogenation of hydrocarbons, such as propane, butane, pentane and the like. Depending on the type of starting materials (chain length, branching and the like) mono-olefins or di-olefins are obtained. It is also possible that cyclisation (i.e. dehydrocyclisation), or isomerisation (dehydroisomerisation) occurs. Generally the term 'dehydrogenation' covers all these types of processes. Useful starting materials are the C₃, the C₄, the C₅ hydrocarbon cuts and their mixtures, resulting in the corresponding mono-olefins.

The catalyst can be used in powder form or in the form of shaped material, such as extrudates, tablets or pellets. It is also possible to 'dilute' the catalyst with inert material, although this does not has a preference. The choice mainly depends on the type of reactor to be used.

Dehydrogenation reactions are generally carried out at temperatures in the range of 400 to 700°, at pressures from atmospheric or higher. Pressures of 1 to 5 bar have proven to be especially useful.

The dehydrogenation can be carried out in the usual reactor type for this process. No specific design is necessary to use this catalyst, although due to the improved performance less regeneration may be necessary. Regeneration can easily be done by passing a current of air through the reactor, thereby burning off the coke. In order to prevent thermal degradation of the catalyst during this procedure, it is preferred to use air having a decreased amount of oxygen, i.e. between 2 and 19.5 vol.%.

The catalysts according to the invention may be prepared in a conventional manner, for example by impregnating the support material with one or more solutions of precursors of the active compounds.

It is preferred to prepare the catalyst by impregnating the alumina with an aqueous solution of a chromium salt (incipient wetness method), followed by drying and calcining the material. The thus obtained intermediate material, containing about 20 to about 30 wt.% of chromium, calculated as chromium (III) oxide, is again impregnated in the same manner with an aqueous chromium salt solution. This material is than dried and calcined resulting in the final catalytic material. If necessary this material may subsequently be shaped, although it is preferred to impregnate a support already possessing the final shape.

The precursor(s) for the promoter may be applied also by impregnation, either simultaneously with one or both of the chromium salt solutions, or separately.

The invention is now elucidated on the basis of the following, non limiting examples.

### EXAMPLES 1 and 2

In a fixed bed reactor propane was dehydrogenated to propylene, using two different catalysts.

The first catalyst was exemplary for the catalyst of US patent # 5,378,350 and the second catalyst was according to the present invention. Both catalysts were supported an a γ-alumina, and contained chromium oxide as the active component, promoted with cesium and zirconium.

The dehydrogenation of propane to propylene was done at a pressure of about 2 bar, a temperature of about 580°C and at a GHSV of 1000h⁻¹.

The composition of the catalysts and the results of the experiments are given in the following tables (the composition of the catalyst is given in weight %).

| Catalyst | 1* | 2 |
|---|---|---|
| Chromiumoxide (as Cr₂O₃) | 25 | 35 |
| ZrO₂ | 0.9 | 0.75 |
| Cesium (as metal) | 2.5 | 1.8 |
| BET catalyst (m²/g) | 100 | 70 |

| Example | 1* | 2 |
|---|---|---|
| Catalyst | 1 | 2 |
| Conversion % | 32 | 32 |
| Selectivity wt.% | 87 | 91 |
| Coke formation wt.% | 1.0 | 0.6 |

| | | |
|---|---|---|
| *: comparative | | |

## Claims

1. Dehydrogenation catalyst based on an aluminium oxide support and chromium oxide, wherein the catalyst contains more than 30 wt.%, but not more than 40 wt.% of chromium, calculated as chromium(III)oxide.

2. Catalyst according to claim 1, wherein the amount of chromium is between 33 and 37 wt. %, calculated as chromium(III)oxide.

3. Catalyst according to claim 1 or 2, wherein the catalyst further contains at least one metal-oxide promoter.

4. Catalyst according to claim 3, wherein the metaloxide promoter is present in an amount of from 0.1 to 5 wt.%, calculated as the metaloxide.

5. Catalyst according to claim 3 or 4, wherein the promoter is selected from the group of alkali metal oxide, alkaline earth metal oxide and oxides of scandium, yttrium, zirconium, lanthanum, titanium or hafnium.

6. Catalyst according to claim 5, wherein the promoter is selected from the group of oxides of cesium, potassium, zirconium, and combinations of two or more thereof.

7. Catalyst according to claim 6, wherein the amount of cesiumoxide and/or potassiumoxide is between 0.5 and 5 wt.%, preferably between 1 and 3 wt.%, calculated as metaloxide.

8. Catalyst according to claim 6 or7, wherein the amount of zirconiumoxide is between 0.1 and 3 wt.%, preferably between 0.5 and 1 wt.%, calculated as metaloxide.

9. Catalyst according to claim 1-8, wherein the support is selected from γ-Al₂O₃ and transition Al₂O₃.

10. Process for the preparation of a dehydrogenation catalyst according to claim 1-9, wherein the support is first impregnated with a solution of a precursor for the chromium oxide, drying and calcining the thus obtained material, followed by a further impregnation with a solution of a precursor for the chromium oxide and drying and calcining the material to obtain the dehydrogenation catalyst.

11. Process according to claim 10, wherein during the first impregnation also a precursor for the promoter is applied.

12. Dehydrogenation catalyst according to any one of the claims 1-9, obtainable by the process of claim 10 or 11.
